# EUROPEAN PATENT SPECIFICATION

(11) **EP 3 565 350 B1**
(45) Date of publication and mention of the grant of the patent: **18.01.2023**
(21) Application number: 18771091.8
(22) Date of filing: 23.03.2018
(51) Int. Cl.: H04W 72/04, H04W 40/24, H04W 76/10, H04W 76/27

(54) **METHOD AND DEVICE FOR ESTABLISHING WIRELESS CONNECTION**
VERFAHREN UND VORRICHTUNG ZUM AUFBAU EINER DRAHTLOSVERBINDUNG
PROCÉDÉ ET DISPOSITIF POUR ÉTABLIR UNE CONNEXION SANS FIL

(30) Priority: 24.03.2017 CN 201710183194
(43) Date of publication of application: 06.11.2019
(73) Proprietor: Huawei Technologies Co., Ltd., Longgang District Shenzhen, Guangdong 518129 (CN)
(72) Inventor: WANG, Man, Shenzhen Guangdong 518129 (CN); ZHANG, Hongzhuo, Shenzhen Guangdong 518129 (CN)
(74) Representative: Epping - Hermann - Fischer
(86) International application number: PCT/CN2018/080099
(87) International publication number: WO 2018/171695

(56) References cited:
- WO-A1-2017/010693
- CN-A- 101 442 784
- CN-A- 103 889 009
- CN-A- 104 349 419
- CN-A- 104 822 169
- CN-A- 105 992 292
- US-A1- 2015 146 565
- US-A1- 2016 183 322
- INTERDIGITAL COMMUNICATIONS: "Control Plane and Connectivity Principles for NR", 3GPP DRAFT; R2-165053 (NR SI AI9434 CP), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Gothenburg, Sweden; 20160822 - 20160826 21 August 2016 (2016-08-21), XP051126685, Retrieved from the Internet: URL:http://www.3gpp.org/ftp/Meetings_3GPP_ SYNC/RAN2/Docs/ [retrieved on 2016-08-21]
- CATT: "Consideration on function split between CU and DU", 3GPP DRAFT; R3-170379_CONSIDERATION ON FUNCTION SPLIT BETWEEN CU AND DU, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. RAN WG3, no. Athens, Greece; 20170213 - 20170217 12 February 2017 (2017-02-12), XP051212971, Retrieved from the Internet: URL:http://www.3gpp.org/ftp/Meetings_3GPP_ SYNC/RAN3/Docs/ [retrieved on 2017-02-12]

## Description

### TECHNICAL FIELD

This application relates to the field of communications technologies, and in particular, to a wireless connection establishment method and an apparatus.

### BACKGROUND

In a cloud radio access network (Cloud Radio Access Network, CRAN) architecture, two independent nodes, namely, a control unit (Control Unit, CU) and a distributed unit (Distributed Unit, DU), on a CRAN control node implement functions of a base station. The DU is also referred to as a data unit. There is a communications interface between the CU and the DU, and the communications interface causes an extra transmission delay. For this reason, various procedure delays on a control plane and a user plane are affected. In an example of an attach (attach) procedure, at least extra nine times the delay of the communications interface is caused. In an example of a handover procedure, extra five times the delay of the communications interface is caused. Even if in an ideal transmission condition, there is a relatively small transmission delay, but frequent exchange of interface messages still greatly affects delays of various procedures. Compared with a more rigid control plane delay and user plane delay in a 5th-generation mobile communication technology (5th-generation, 5G for short), a CU-DU communication delay is quite large, and a requirement for a low delay of a 5G system cannot be met, degrading system performance.

Therefore, how to reduce the control plane delay in the CU-DU architecture is a problem that needs to be resolved urgently.

WO 2017/010963 A1 discloses a method for configuring wireless connection of a terminal with a mobile communication network, and an apparatus therefor. In particular, the it relates to a method of configuring, by an access unit, wireless connection of a terminal, and an apparatus therefor, the method comprising the steps of: transmitting, to a central unit, a first message comprising an uplink RRC message received from the terminal; receiving, from the central unit, a second message comprising a downlink RRC message; and transmitting the downlink RRC message to the terminal.

US 2016/183322 A1 discloses a method, device and system for managing multi-connection of a terminal. The method includes: a source base station of a terminal controlling the terminal to establish a connection with at least one of other base stations and updating a path over which the terminal transmits data to passing through the source base station and the at least one of other base stations after the terminal has established the connection with the at least one of other base stations.

### SUMMARY

This application provides a wireless connection establishment method and an apparatus, to reduce a control plane delay caused by separation of functions of a base station. The invention is defined by the appended claims. In the following, parts of the description and drawings referring to embodiments which are not covered by the claims are not presented as embodiments of the invention, but as examples useful for understanding the invention.

According to a first aspect, this application provides a wireless connection establishment method, including: sending, by a first network node, first resource configuration information to a second network node; and establishing, by the first network node, a wireless connection to a terminal and the second network node based on received second resource configuration information that is sent by the second network node. Therefore, in a specific procedure trigger process, during resource configuration, the second network node does not need to trigger the first network node in advance to report the resource configuration information, and instead, the second network node can directly send the resource configuration information of the first network node, or send the resource configuration information of the first network node in advance. The first network node directly generates RRC configuration information as required, or directly sends, to the terminal, a resource configuration status that is sent by the second network node in advance, and exchange of the resource configuration information does not need to wait to be performed before a specific wireless connection is initiated or in a wireless connection establishment process, thereby reducing a control plane delay of establishing different procedures between the first network node and the second network node.

In a possible design, the wireless connection is any one of the following: a connection management procedure, a handover procedure, a bearer management procedure, and a paging and area update procedure.

In a possible design, the sending, by a first network node, first resource configuration information to a second network node includes: sending, by the first network node, the first resource configuration information to the second network node periodically or when a trigger condition is triggered; or receiving, by the first network node, a resource configuration information request sent by the second network node, and sending the first resource configuration information to the second network node in a sending manner indicated by the resource configuration information request, where the sending manner is periodically sending or sending when the trigger condition is triggered.

In a possible design, the trigger condition is any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value.

In a possible design, the first resource configuration information includes any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of packet data convergence protocol PDCP resource configuration information, radio link control RLC resource configuration information, media access control MAC resource configuration information, and physical layer PHY resource configuration information.

In a possible design, the method further includes: receiving, by the first network node, a resource status report response sent by the second network node.

The method further includes: receiving, by the first network node, initial resource configuration information sent by the second network node when the second network node establishes a link connection to the first network node, where the initial resource configuration information is information allocated by the second network node to the terminal.

According to a first example useful for understanding the invention, this application provides a wireless connection establishment method, including:
receiving, by a second network node, first resource configuration information sent by a first network node, or sending, by the second network node, second resource configuration information to the first network node, where the first resource configuration information or the second resource configuration information is used by the first network node to establish a wireless connection to a terminal and the second network node, thereby reducing a control plane delay of establishing different procedures between the first network node and the second network node.

In a possible design of the first example, the wireless connection is any one of the following: a connection management procedure, a handover procedure, a bearer management procedure, and a paging and area update procedure.

In a possible design of the first example, the first resource configuration information is resource configuration information sent by the first network node to the second network node periodically or sent by the first network node to the second network node when a trigger condition is triggered; or
the first resource configuration information is resource configuration information that is sent by the first network node to the second network node in a sending manner indicated by a resource configuration information request, where the resource configuration information request is sent by the second network node and received by the first network node, where the sending manner is periodically sending or sending when the trigger condition is triggered.

In a possible design of the first example, the trigger condition is any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value.

In a possible design of the first example, the first resource configuration information includes:
any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of packet data convergence protocol PDCP resource configuration information, radio link control RLC resource configuration information, media access control MAC resource configuration information, and physical layer PHY resource configuration information.

In a possible design of the first example, the method further includes: sending, by the second network node, a resource status report response to the first network node.

In a possible design of the first example, the method further includes: sending, by the second network node, initial resource configuration information to the first network node before or when the second network node establishes a link connection to the first network node, where the initial resource configuration information is information allocated by the second network node to the terminal.

According to a second example useful for understanding the invention, this application provides a wireless connection establishment method, including: receiving, by a first network node, a radio resource control RRC connection request message sent by a terminal; sending, by the first network node, an RRC connection establishment message to the terminal; receiving, by the first network node, an RRC connection establishment complete message sent by the terminal; and sending, by the first network node, the RRC connection establishment complete message to a second network node. Some RRC functions are performed by the first network node, so that some control plane procedures are implemented directly through interaction between the first network node and the terminal without requiring interaction between the first network node and the second network node, and an interface delay between the first network node and the second network node is reduced, thereby reducing a control plane delay in a CU-DU architecture and providing better user experience.

In a possible design of the second example, there is a communications interface between the first network node and the second network node, and the second network node controls the first network node.

In a possible design of the second example, the method further includes: allocating, by the first network node, a network temporary identifier to the terminal; and after the sending, by the first network node, the RRC connection establishment complete message to a second network node, the method further includes: sending, by the first network node, the allocated network temporary identifier to the second network node.

In a possible design of the second example, the method further includes: receiving, by the first network node, allocation information that is of the network temporary identifier and that is sent by the second network node when the second network node establishes a link connection to the first network node, and storing the allocation information of the network temporary identifier; and allocating, by the first network node, the network temporary identifier to the terminal based on the allocation information of the network temporary identifier.

In a possible design of the second example, the method further includes: configuring, by the first network node for the terminal, first resource configuration information required for RRC connection establishment when the second network node establishes a link connection to the first network node, or configuring, by the first network node for the terminal, resource configuration information required for RRC connection establishment based on the received first resource configuration information sent by the second network node.

In a possible design of the second example, the RRC connection establishment complete message includes a registration request message; or after the receiving, by a first network node, a radio resource control RRC connection request message sent by a terminal, the method further includes: sending, by the first network node, the registration request message to the second network node.

In a possible design of the second example, the method further includes: configuring, by the first network node for the terminal, second resource configuration information required for RRC connection re-establishment when the second network node establishes a link connection to the first network node and the terminal, or configuring, by the first network node for the terminal, resource configuration information required for RRC connection re-establishment based on the received second resource configuration information sent by the second network node.
According to a third example useful for understanding the invention, this application provides an apparatus, including a function of the first network node for implementing the wireless connection establishment method in the first aspect or the second example. The function may be implemented by using hardware, or may be implemented by using hardware by executing corresponding software. The hardware or the software includes one or more units corresponding to the foregoing function.

In a possible implementation of the third example, a structure of the apparatus includes a processor and a transceiver, and the processor is configured to support the apparatus in performing a corresponding function in the wireless connection establishment method. The transceiver is configured to: support communication between a first network node and a terminal, and send information or instructions related to the foregoing wireless connection establishment method to the terminal. The apparatus may further include a memory. The memory is configured to: couple to the processor, and store necessary program instructions and data of the apparatus. The apparatus may further include a communications interface, and the communications interface is configured to communicate with another network device.

The apparatus being a DU.

According to a fourth example useful for understanding the invention, this application provides an apparatus, including a function of the second network node for implementing the wireless connection establishment method in the first example. The function may be implemented by using hardware, or may be implemented by using hardware by executing corresponding software. The hardware or the software includes one or more units corresponding to the foregoing function.

In a possible implementation of the fourth example, a structure of the apparatus includes a processor and a transceiver, and the processor is configured to support the apparatus in performing a corresponding function in the wireless connection establishment method. The transceiver is configured to: support communication between a first network node and a second network node, and send information or instructions related to the foregoing wireless connection establishment method to a terminal. The apparatus may further include a memory. The memory is configured to: couple to the processor, and store necessary program instructions and data of the apparatus. The apparatus may further include a communications interface, and the communications interface is configured to communicate with another network device.

The apparatus may be a CU.

According to a fifth example useful for understanding the invention, this application provides an apparatus, including at least one processing element (or a chip) for performing the method in the first aspect, the first example, or the second example.

According to a sixth example useful for understanding the invention, this application provides a program, and when the program is executed by a processor, the program is configured to perform the method in the first aspect, the first example, or the second example.

According to a seventh example useful for understanding the invention, this application provides a program product, for example, a computer-readable storage medium, including the program in the sixth example.

According to an eigths example useful for understanding the invention, this application provides a computer-readable storage medium, the computer-readable storage medium stores an instruction, and when the instruction runs on a computer, the computer is enabled to perform the method in the first aspect, the first example, or the second example.

According to a ninth example useful for understanding the invention, this application provides a communications system, and the communications system includes the foregoing first network node and the second network node, and further includes a terminal. The first network node may be a DU, the second network node may be a CU, the CU and the DU may be located in a network device or in a same site, and the CU and the DU may be independent devices located at different geographical locations.

### BRIEF DESCRIPTION OF DRAWINGS

FIG. 1 is a schematic diagram of a CU-DU architecture;
FIG. 2 is a flowchart of a wireless connection establishment method according to this application;
FIG. 3 is a flowchart of a wireless connection establishment method according to this application;
FIG. 4 is an interaction flowchart of an attach procedure in the related art;
FIG. 5 is a schematic structural diagram of an apparatus 500 according to this application;
FIG. 6 is a schematic structural diagram of an apparatus 600 according to this application;
FIG. 7 is a schematic structural diagram of an apparatus 700 according to this application;
FIG. 8 is a schematic structural diagram of an apparatus 800 according to this application;
FIG. 9 is a schematic structural diagram of an apparatus 900 according to this application;
FIG. 10 is a schematic structural diagram of an apparatus 1000 according to this application; and
FIG. 11 is a schematic structural diagram of an apparatus 1100 according to this application.

### DESCRIPTION OF EMBODIMENTS

The technical solutions in this application may be applied to various forms of systems that include a base station in which some functions are separated, for example, a fourth-generation mobile communications system (4G) evolved system, for example, long term evolution (long term evolution, LTE), and a fifth-generation mobile communications system (5G), for example, new radio access network (New RAN/New Radio, NR). In the LTE system, there is a case of separation of a baseband module from a radio frequency module, namely, a radio frequency remote scenario, a dual-connectivity (Dual-connectivity, DC) scenario, a micro base station and macro base station scenario, and an LTE wireless local area network interworking (LTE-WLAN interworking, LWA) scenario. In the 5G system, there are various non-cell (non-cell) scenarios, a cloud radio access network (Cloud Radio Access Network, CRAN) scenario, a virtualization scenario, and a scenario in which different systems/standards coexist, and the scenarios fall with the scope of application of this application.

In the embodiments of this application, the term "terminal" includes, but is not limited to, a mobile station, a fixed or mobile subscriber unit, a pager, a cellular phone, a personal digital assistant (Personal Digital Assistant, PDA), a computer or any other type of user equipment (user equipment, UE) that can work in a wireless environment. The term "base station" includes but is not limited to, a base station, a node, a station controller, an access point (Access Point, AP), a remote unit (Remote Unit, RU) or any other type of interface device that can work in a wireless environment.

In the base station, some functions may be implemented by different network nodes (for ease of description, the following describes the different network nodes as a first network node and a second network node), in scenarios of separation of a CU-DU (for ease of description, in the embodiments of this application, a CU and a DU co-perform an access network function, that is, a scenario in which a base station is divided into a CU and a DU is described as the "CU-DU", details are not described again hereinafter), and networking of a micro base station and a macro base station, and various scenarios in which base station functions are separated. There is a standardized or non-standardized interface between the first network node and the second network node, and a data transmission delay is caused at this interface. It may be understood that, the first network node and the second network node are used only as an example, and an actual quantity of network nodes is determined by an actual network status. For example, in a CU-DU scenario, one CU may manage at least one DU.

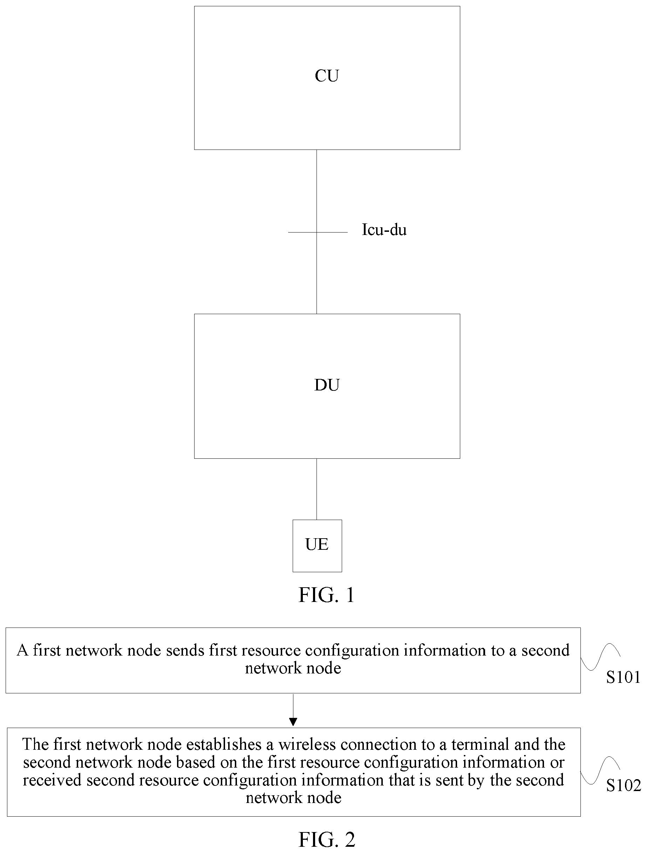

FIG. 1 is a schematic diagram of a CU-DU architecture with CU-DU separation as an example. As shown in FIG. 1, after a base station is divided into a CU-DU, an extra interface Icu-du is added between the CU-DU.

The CU has radio resource control (Radio Resource Control, RRC) functions or partial RRC functions, including all or partial protocol layer functions of an existing base station. For example, the CU includes only RRC functions or partial RRC functions, includes RRC functions and packet data convergence protocol (Packet Data Convergence Protocol, PDCP) layer functions, includes RRC/PDCP functions and partial radio link control (Radio Link Control, RLC) functions; or includes RRC/PDCP/media access control (Medium Access Control, MAC) functions, or even partial or all physical layer (Physical Layer, PHY) functions, without excluding any other possibility. The DU has all or partial protocol layer functions of the existing base station, namely, functional units of some of RRC/PDCP/RLC/MAC/PHY protocol layers. For example, the DU includes functions of protocol layers such as PDCP/RLC/MAC/PHY, includes functions of protocol layers such as RLC/MAC/PHY, includes partial RLC/MAC/PHY functions, or includes all or partial PHY functions only. It should be noted that the functions of the various protocol layers mentioned herein may change, and the changes fall within the protection scope of this application. The CU-DU may be two independent logical network elements or two independent devices. When the CU and the DU are used as logical network elements, the CU and the DU may be two devices at separate geographical locations, or two devices in one site, or two functional units in one device.

It should be understood that, a character "/" in this application indicates that the former and latter associated objects have an "or" relationship.

This application provides a wireless connection establishment method and an apparatus, to reduce a control plane delay caused by separation of functions of a base station, and provide better user experience. The following describes the technical solutions in this application in detail with reference to the accompanying drawings.

FIG. 2 is a flowchart of a wireless connection establishment method according to this application. As shown in FIG. 2, the method in this embodiment may include the following steps.

S101. A first network node sends first resource configuration information to a second network node.

The first network node may be a DU, and the second network node may be a CU. Optionally, that a first network node sends first resource configuration information to a second network node may be as follows: The first network node sends the first resource configuration information to the second network node periodically or when a trigger condition is triggered. In other words, the first network node proactively reports the first resource configuration information to the second network node. A periodic sending period is set by the first network node and then indicated to the second network node, or broadcast by the second network node by using a system message, or indicated to the first network node by the second network node in advance. For example, the CU notifies the DU of the periodic sending period at an early stage of setup of a CU-DU link, and then the DU reports the first resource configuration information of the DU at this period. In the manner in which the first network node actively reports the first resource configuration information, after receiving the first resource configuration information sent by the first network node, the second network node sends a resource status report response to the first network node, to notify the first network node that the second network node receives latest resource configuration information.

Alternatively, that a first network node sends first resource configuration information to a second network node may be as follows: The first network node receives a resource configuration information request sent by the second network node, and sends the first resource configuration information to the second network node in a sending manner indicated by the resource configuration information request, where the sending manner is periodically sending or sending when the trigger condition is triggered. In other words, the first network node reports the first resource configuration information to the second network node as instructed by the second network node.

The first resource configuration information includes any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of PDCP resource configuration information, RLC resource configuration information, MAC resource configuration information, and PHY resource configuration information. The paging cycle configuration is, for example, a discontinuous reception (Discontinuous Reception, DRX) cycle configuration. The physical transmission resource configuration is, for example, physical resource block (Physical resource block, PRB) configuration information.

Optionally, the first resource configuration information may be classified into static configuration information and dynamic configuration information.

The static configuration information is configuration information whose information does not frequently change within a period of time and a change range falls within a preset threshold range, and includes all configuration information other than semi-static configuration information and the dynamic configuration information. The semi-static configuration information includes a semi-persistent scheduling (semi-persistent scheduling, SPS) configuration. The first network node or the second network node may be set to periodically report any one or more of the PDCP resource configuration information, the RLC resource configuration information, the MAC resource configuration information, and the PHY resource configuration information. Specifically, the PDCP, RLC, MAC, and PHY resource configuration information include the following content:
Static PDCP resource configuration information includes update of a security key, and setting of a PDCP-related timer (for example, a packet loss timer) and a reordering window. Static RLC resource configuration information includes a retransmission threshold, a polling trigger mechanism, and a sequence number length. Static MAC resource configuration information includes: a MAC configuration, a buffer status report timer (Buffer Status Report timer, BSR timer), a DRX configuration, a time alignment timer (Time Alignment Timer, TA timer), a scheduling request (Scheduling Request, SR) configuration, and the like. Static PHY resource configuration information includes a physical layer dedicated resource configuration (Physical Config Dedicated), and the physical layer dedicated resource configuration mainly includes a physical downlink shared channel (Physical Downlink Shared Channel, PDSCH), a physical uplink control channel (Physical Uplink Control Channel, PUCCH), a physical uplink shared channel (Physical Uplink Shared Channel, PUSCH), uplink (UpLink, UL) power control, a channel quality indicator (Channel Quality Indicator, CQI) reporting configuration, an antenna transmission mode configuration, an SPS configuration, cell-related configuration information, and a cell identifier list. The cell-related configuration information includes a cell identifier, a cell-related DRX configuration, and various parameter configurations of a cell, such as a random access-related configuration.

The dynamic configuration information is configuration information whose information frequently changes within a period of time and a change range exceeds a preset threshold range. The dynamic configuration information mainly includes any one or more of a DRX cycle configuration, PRB configuration information, antenna beam configuration information, interface load between the first network node and the second network node, an identifier of the first network node, a cell identifier list related to the first network node, a channel quality reporting configuration, and an antenna mode configuration. When resources change quite frequently or an unexpected event occurs, for example, channel quality suddenly deteriorates, the first network node or the second network node may be set to send the dynamic configuration information when the trigger condition is triggered. The trigger condition is, for example, any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value. The air interface condition changes, for example, air interface channel quality suddenly deteriorates, or a CQI status report shows that air interface channel quality is less than a specific threshold. The antenna transmission mode changes from one antenna transmission mode to another antenna transmission mode. The resource utilization of the first network node is greater than the preset threshold, for example, PRB use exceeds a preset threshold. This may cause a conflict to subsequent resource allocation. After physical layer resource use exceeds a specific threshold, more precise scheduling information obtained in real time is required.

A CU-DU is used as an example. Because a plurality of DUs share one CU-DU interface, load of the interface exceeds a specific threshold, and the load of the interface directly affects a delay of a link. For example, the plurality of DUs share one interface, and final load of the CU-DU interface needs to be indicated to the CU in real time. For example, when the load of the interface exceeds a specific threshold, for example, 50%, increases of a delay of the CU-DU interface are directly accelerated. In this case, the DU needs to report the load in time, so that the CU schedules and allocates resources based on the load. When a plurality of DUs are connected to a same CU, the last DU connected to the CU may report the load of the interface. In a manner of requesting the resource configuration information by the second network node, the trigger condition may be added to the resource configuration information request by the CU when the CU sends the resource configuration information request.

S102. The first network node establishes a wireless connection to a terminal and the second network node based on the first resource configuration information or received second resource configuration information that is sent by the second network node.

The wireless connection may be any one of a connection management procedure, a handover procedure, a bearer management procedure, and a paging and area update procedure. The connection management procedure includes an attach, registration, and service request procedure, a releasing process, and a re-establishment procedure. The handover procedure includes intra-DU handover and intra-CU handover. The bearer management procedure includes setup, modification and deletion procedures of a general bearer and a dedicated bearer. The area update procedure is, for example, a tracking area update procedure. The wireless connection may be alternatively another wireless connection process that has a requirement on a delay.

Specifically, the second network node sends initial resource configuration information to the first network node before or when the second network node establishes a link connection to the first network node, and stores the initial resource information. For example, before or when access and handover are performed or a bearer is set up, the CU performs unified resource allocation based on the stored initial resource information, and then notifies the DU of a resource allocation status in time before or when a radio link connection between the CU-DU is established. In this way, a process of exchanging the resource configuration information between the CU and the DU does not occupy a total time of a radio link connection procedure. The first resource configuration information is resource configuration information that is sent by the first network node to the second network node and that dynamically changes. The second configuration information includes the first configuration information and the initial resource configuration information. After receiving the resource configuration information (namely, the first resource configuration information) that dynamically changes, the second network node sends the first resource configuration information and the initial resource configuration information to the first network node and the terminal through the wireless connection. According to the method, because the resource configuration information is exchanged periodically between the first network node and the second network node or exchanged when the trigger condition is triggered, the second network node can learn of a resource status of the first network node, and exchange of the resource configuration information does not need to wait to be performed before a specific wireless connection is initiated or in a wireless connection establishment process, thereby reducing a time of establishing a control plane procedure. For example, in an attach procedure, a delay of two pieces of signaling, that is, a radio link setup request (radio link setup request) and a radio link setup response (radio link setup response), can be reduced, and if sending a reconstruction (reconfiguration) configuration in advance is considered, a delay of three pieces of signaling in a procedure can be reduced. Segmentation of the CU-DU is used as an example. There is a communications interface between the CU and the DU, and a time for which signaling is transmitted through the communications interface is referred to as an interface delay. For the handover procedure, the segmentation of the CU-DU causes extra five times the interface delay. Two times the interface delay is a delay added due to the interface, and three times the interface delay is a prolonged delay of an original message. In the foregoing method, exchange of configuration information is performed between CU-DU periodically or triggered by an event, an added extra delay is three times the interface delay, and compared with the handover procedure in the prior art, two times the interface delay due to transmission of a radio link setup request and a radio link setup response is reduced.

According to the wireless connection establishment method provided in this embodiment, the first network node sends the first resource configuration information to the second network node before establishing a wireless connection to the terminal and the second network node, and the first network node establishes the wireless connection to the terminal and the second network node based on the first resource configuration information or the received second resource configuration information that is sent by the second network node. Therefore, in a specific procedure trigger process, during resource configuration, the second network node does not need to trigger the first network node in advance to report the resource configuration information, and instead, the second network node can directly send the resource configuration information of the first network node, or send the resource configuration information of the first network node in advance. The first network node directly generates RRC configuration information as required, or directly sends, to the terminal, a resource configuration status that is sent by the second network node in advance, and exchange of the resource configuration information does not need to wait to be performed before the specific wireless connection is initiated or in a wireless connection establishment process, thereby reducing a control plane delay of establishing various procedures between the first network node and the second network node.

To reduce a control plane delay in, for example, a CU-DU architecture, and provide better user experience, this application provides another wireless connection establishment method to be described below. The following provides a detailed description by using an attach procedure as an example.

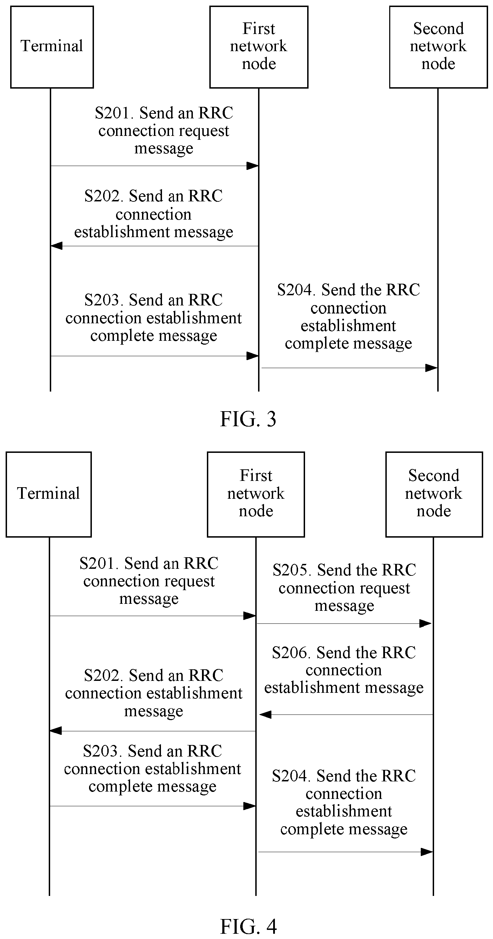

FIG. 3 is a flowchart of a wireless connection establishment method according to this application. As shown in FIG. 3, the method in this embodiment may include the following steps.

S201. A terminal sends an RRC connection request message to a first network node.

S202. The first network node sends an RRC connection establishment message to the terminal. S203. The terminal sends an RRC connection establishment complete message to the first network node.

S204. The first network node sends the RRC connection establishment complete message to a second network node.

There is a communications interface between the first network node and the second network node, and the second network node controls the first network node.

In this embodiment, compared with an existing attach procedure, FIG. 4 is an interaction flowchart of an attach procedure in the related art. In this embodiment, a function of a default signaling radio bearer SRB 0 in a signaling radio bearer (Signaling radio bearer, SRB) is deployed down to the second network node. Both of the two messages, the RRC connection request message in S205 and the RRC connection establishment message in S206 in the attach procedure, can be completed between the terminal and the first network node, and do not need to be sent to the second network node. In addition, because a security procedure has not been activated when the channel SRB 0 is set up, the RRC message in this case does not need to be encrypted, and an encryption function of a PDCP layer is not involved. After the function of the SRB 0 is deployed down to the first network node, interaction of two signaling procedures between two network nodes is reduced, thereby reducing a control plane delay.

Further, the RRC connection establishment message carries a network temporary identifier (T-C-RNTI or C-RNTI) allocated to the terminal. This allocation function may be executed by the first network node, or may be executed by the second network node. When the function of allocating the network temporary identifier is executed by the second network node, a delay of interaction between the first network node and the second network node does not affect an entire control plane delay. In this embodiment, there are specifically two following implementable allocation manners.

First implementable allocation manner: In the embodiment shown in FIG. 3, the method further includes: The first network node allocates the network temporary identifier to the terminal. In this way, the delay of interaction between the first network node and the second network node does not need to be occupied. Correspondingly, after the first network node sends the RRC connection complete message to a second network node, the method further includes: The first network node sends the allocated network temporary identifier to the second network node. A sending process may be completed in a subsequent signaling procedure, so that a delay at a beginning time when a procedure is established does not need to be occupied in real time.

The RRC connection request message (for example, msg3) further relates to a conflict resolution function, and also needs to be added to the first network node. However, a final result still needs to be fed back to the second network node by the first network node, or may be completed in a subsequent signaling procedure, so that a delay at a beginning time when a procedure is established does not need to be occupied in real time.

Second implementable allocation manner: In the embodiment shown in FIG. 3, the method further includes: The first network node receives allocation information that is of the network temporary identifier and that is sent by the second network node when the second network node establishes a link connection to the first network node, and stores the allocation information of the network temporary identifier; and the first network node allocates the network temporary identifier to the terminal based on the allocation information of the network temporary identifier. A CU-DU architecture is used as an example. When a link connection is established between a CU and a DU, the CU notifies the DU of allocation information of an identifier such as a network temporary identifier, reserves the identifier in the DU in advance, and when the DU needs to allocate the identifier to the terminal, the DU directly allocates the identifier to the terminal, so that similarly, a delay at a beginning time when a procedure is established does not need to be occupied in real time.

Optionally, functions of an SRB 0 and an SRB 1 may alternatively be deployed down to the first network node. The SRB 1 is an RRC connection establishment bearer. After the functions of the SRB 0 and the SRB 1 are deployed down to the second network node, all of the RRC connection request message, the RRC connection establishment message, and the RRC connection establishment complete message in the attach procedure may be completed between the terminal and the first network node, and do not need to be sent to the second network node. However, the first network node needs to send an attach request (attach request) message to the second network node, and this message may be carried in the RRC connection establishment complete message. Therefore, the first network node still needs to send the RRC connection establishment message to the second network node. Alternatively, after the first network node receives the radio resource control RRC connection request message sent by the terminal, the method further includes: The first network node sends a registration request message to the second network node. In addition, transmission of other messages related to RRC connection establishment is simultaneously performed, and does not need to wait for a feedback from the second network node or a core network. Although the RRC connection establishment complete message between the first network node and the second network node still needs to be transmitted, an extra delay is not added to the entire procedure.

In addition, because a security procedure has not been activated when the channels SRB 0 and SRB 1 are set up, the RRC message in this case does not need to be encrypted, and an encryption function of a PDCP layer is not involved. After the functions of the SRB 0 and SRB 1 are deployed down to the first network node, interaction of three signaling procedures between the first network node and the second network node is reduced, thereby reducing a control plane delay.

In this case, configuration and establishment of the SRB 1 are completed on the first network node. In this manner, correspondingly, the method shown in FIG. 3 further includes: The first network node configures, for the terminal, first resource configuration information required for RRC connection establishment when the second network node establishes a link connection to the first network node, or the first network node configures, for the terminal, resource configuration information required for RRC connection establishment based on the received first resource configuration information sent by the second network node. That is, a configuration required for setup of the SRB 1, for example, a configuration related to MAC/PHY, may be configured on the first network node in advance; or the second network node sends a related configuration in advance or periodically to the first network node, and the first network node directly performs configuration for the terminal when the configuration is required.

Specifically, configuration parameters required for the setup of the SRB 1 include: a parameter list related to setup of an SRB (SRB ToAddMod list), a parameter list related to setup of a data radio bearer (data radio bearer, DRB), and a parameter list related to releasing of a DRB (DRB ToRelease list). Content that needs to be configured for the parameter list related to setup of an SRB is: MAC and PHY configurations. Specific content of the MAC and PHY configurations includes static MAC resource configuration information, including a MAC configuration, a BSR timer, a DRX configuration, a TA timer, an SR configuration, and the like. Static PHY resource configuration information includes a physical layer dedicated resource configuration (Physical Config Dedicated), and the physical layer dedicated resource configuration mainly includes: a PDSCH, a PUCCH, a PUSCH, UL power control, a CQI reporting configuration, an antenna transmission mode configuration, an SPS configuration, cell-related configuration information, and a cell identifier list. The cell-related configuration information includes a cell identifier, a cell-related DRX configuration, and various parameter configurations of a cell, such as a random access-related configuration.

The first resource configuration information is statically configured, and may be configured for the terminal on the first network node in advance. If there is dynamic configuration information, the dynamic configuration information needs to be periodically controlled. On one hand, the dynamic configuration information may be updated in a subsequent interaction process between the first network node and the second network node; and on the other hand, the configuration information may be updated when a radio link is established. For example, the first network node needs to send ID information of the first network node and a list of ID information of cells included in the first network node to the second network node for updating.

In all the resource configuration information described above, the static configuration information is configuration information whose information does not frequently change within a period of time and a change range falls within a preset threshold range, and configuration information that does not change in a process of a connection to the terminal, and includes all configuration information other than semi-static configuration information and the dynamic configuration information. The semi-static configuration information mainly has an SPS configuration. The dynamic configuration information mainly includes a DRX cycle configuration, PRB configuration information, antenna beam configuration information, interface load between the first network node and the second network node, an identifier of the first network node, and a cell identifier list related to the first network node.

Optionally, functions of an SRB 0, an SRB 1, and an SRB 2 may alternatively be deployed down to the first network node. The SRB 2 is a bearer set up for RRC reconfiguration, and a specific configuration in which the functions of the SRB 0 and the SRB 1 are deployed down to the first network node is described above. When the function of the SRB 2 is deployed down to the first network node, configuration procedures of the SRB 2 and a DRB may be simplified, and configurations of the SRB 1, the SRB 2, and the DRB are performed at the same time. Configurations of the SRB 2 and the DRB are both completed while the SRB 1 is set up. For example, in an attach procedure, configurations of RRC connection re-establishment (RRC connection reconfiguration), an RRC connection request message, and an RRC connection establishment message may be completed at the same time. In this way, the first network node can re-establish an RRC connection at any time required, and does not need to wait to activate RRC connection re-establishment between the second network node and the terminal until the second network node sends a configuration.

However, the down-deployment of the function of the SRB 2 also requires down-deployment of a PDCP security encryption function. Because the security procedure has been performed when an RRC connection is re-established, and a subsequent message needs to be encrypted based on a security information configuration, a PDCP layer parameter needs to be configured on the first network node. A configuration required for the setup of the SRB 1, for example, a configuration related to MAC and PHY is configured in advance on the first network node; or a configuration related to the second network node is sent to the second network node before a wireless connection is established, and the second network node directly performs configuration for the terminal in a wireless connection establishment process.

In this manner, correspondingly, the method shown in FIG. 3 further includes: The first network node configures, for the terminal, second resource configuration information required for RRC connection re-establishment when the second network node establishes a link connection to the first network node and the terminal, or the first network node configures, for the terminal, resource configuration information required for RRC connection re-establishment based on the received second resource configuration information sent by the second network node.

Specifically, the second resource configuration information includes static PDCP, RLC, MAC, and PHY resource configuration information. For details, refer to the description of the embodiment shown in FIG. 2, and details are not described herein again. The configuration of the static resource configuration information may be configured in advance for the terminal on the first network node. If there is the dynamic configuration information, the dynamic configuration information needs to be periodically controlled. On one hand, the dynamic configuration information may be updated in a subsequent interaction process between the first network node and the second network node; and on the other hand, the configuration information may be updated when a radio link is established.

In this embodiment, the manner in which the functions of the SRB 0, the SRB 1, and the SRB 2 are deployed down to the first network node is used. For the attach procedure, an added delay between the CU-DU is two times a CU-DU interface delay, and compared with added nine times a control plane delay in the prior art, seven times the interaction delay between the CU-DU is reduced.

According to the wireless connection establishment method provided in this embodiment, some RRC functions are performed by the first network node, so that some control plane procedures are implemented directly through interaction between the first network node and the terminal without requiring interaction between the first network node and the second network node, and an interface delay between the first network node and the second network node is reduced, thereby providing better user experience.

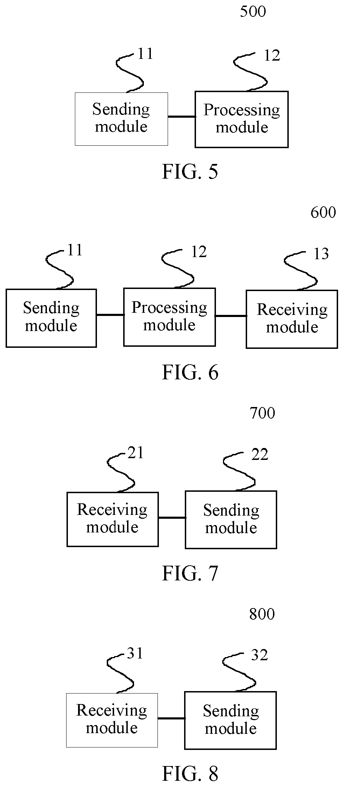

FIG. 5 is a schematic structural diagram of an apparatus 500 according to this application. The apparatus in this embodiment may be a DU, and a second network node to be described below may be a CU. As shown in FIG. 5, the apparatus in this embodiment may include a sending module 11 and a processing module 12. The sending module 11 is configured to send first resource configuration information to the second network node, and the processing module 12 is configured to establish a wireless connection to a terminal and the second network node based on the first resource configuration information or received second resource configuration information that is sent by the second network node.

The wireless connection may be any one of a connection management procedure, a handover procedure, a bearer management procedure, and a paging and area update procedure.

Optionally, the sending module 11 is configured to: send the first resource configuration information to the second network node periodically or when a trigger condition is triggered; or receive a resource configuration information request sent by the second network node, and send the first resource configuration information to the second network node in a sending manner indicated by the resource configuration information request, where the sending manner is periodically sending or sending when the trigger condition is triggered.

Optionally, the trigger condition is any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value.

Optionally, the first resource configuration information includes any one or more of a DRX cycle configuration, a PRB configuration, antenna beam configuration information, interface load between the first network node and the second network node, an identifier of the first network node, a cell identifier list related to the first network node, a channel quality reporting configuration, and an antenna mode configuration, and any one or more of PDCP resource configuration information, RLC resource configuration information, MAC resource configuration information, and PHY resource configuration information.

The apparatus in this embodiment may be used to execute the technical solutions of the method embodiment shown in FIG. 2. Implementation principles and technical effects thereof are similar, and are not further described herein.

FIG. 6 is a schematic structural diagram of an apparatus 600 according to this application. As shown in FIG. 6, based on the structure of the apparatus shown in FIG. 5, the apparatus in this embodiment may further include a receiving module 13. The receiving module 13 is configured to receive a resource status report response sent by the second network node; or the receiving module 13 is configured to receive initial resource configuration information sent by the second network node before or when the second network node establishes a link connection to the first network node, where the initial resource configuration information is information allocated by the second network node to the terminal.

The apparatus in the embodiment shown in FIG. 6 may be configured to execute the technical solutions of the method embodiment shown in FIG. 2. Implementation principles and technical effects thereof are similar, and are not further described herein.

FIG. 7 is a schematic structural diagram of an apparatus 700 according to this application. The apparatus in this embodiment may be a CU, and a first network node to be described below may be a DU. As shown in FIG. 7, the apparatus in this embodiment may include a receiving module 21 and a sending module 22. The receiving module 21 is configured to receive first resource configuration information sent by the first network node. The sending module 22 is configured to send second resource configuration information to the first network node, where the first resource configuration information or the second resource configuration information is used by the first network node to establish a wireless connection to the terminal and the second network node.

Optionally, the wireless connection is any one of the following: a connection management procedure, a handover procedure, a bearer management procedure, and a paging and area update procedure.

Optionally, the first resource configuration information is resource configuration information sent by the first network node to the second network node periodically or sent by the first network node to the second network node when a trigger condition is triggered; or
the first resource configuration information is resource configuration information that is sent by the first network node to the second network node in a sending manner indicated by a resource configuration information request, where the resource configuration information request is sent by the second network node and received by the first network node, where the sending manner is periodically sending or sending when the trigger condition is triggered.

Optionally, the trigger condition is any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value.

Optionally, the first resource configuration information includes any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of packet data convergence protocol PDCP resource configuration information, radio link control RLC resource configuration information, media access control MAC resource configuration information, and physical layer PHY resource configuration information.

Further, the sending module 22 is further configured to send a resource status report response to the first network node.

Further, the sending module 22 is further configured to send initial resource configuration information to the first network node before or when the second network node establishes a link connection to the first network node, where the initial resource configuration information is information allocated by the second network node to the terminal.

The apparatus in the embodiment shown in FIG. 7 may be configured to execute the technical solutions of the method embodiment shown in FIG. 2. Implementation principles and technical effects thereof are similar, and are not further described herein.

An embodiment of this application provides a communications system, including a terminal, the apparatus shown in FIG. 5 or FIG. 6, and the apparatus shown in FIG. 7.

FIG. 8 is a schematic structural diagram of an apparatus 800 according to this application. The apparatus in this embodiment may be a DU, and a second network node to be described below may be a CU. As shown in FIG. 8, the apparatus in this embodiment may include a receiving module 31 and a sending module 32. The receiving module 31 is configured to receive a radio resource control RRC connection request message sent by a terminal. The sending module 32 is configured to send an RRC connection establishment message to the terminal, the receiving module 31 is further configured to receive an RRC connection establishment complete message sent by the terminal, and the sending module 32 is further configured to send the RRC connection establishment complete message to the second network node.

There is a communications interface between the apparatus in this embodiment and the second network node, and the second network node controls the apparatus.

The apparatus in this embodiment may be configured to execute the technical solutions of the method embodiment shown in FIG. 3. Implementation principles and technical effects thereof are similar, and are not further described herein.

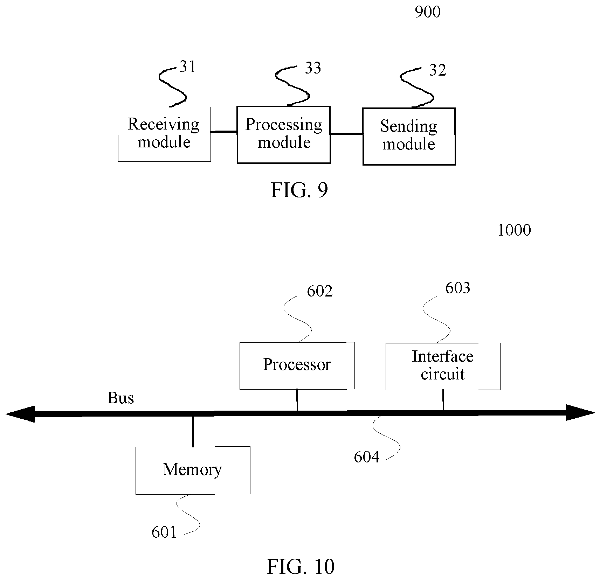

FIG. 9 is a schematic structural diagram of an apparatus 900 according to this application. As shown in FIG. 9, based on the structure of the apparatus in FIG. 8, the apparatus in this embodiment may further include a processing module 33. The processing module 33 is configured to allocate a network temporary identifier to the terminal. The sending module 32 is further configured to: after sending an RRC connection complete message to the second network node, send the allocated network temporary identifier to the second network node.

Optionally, the receiving module 31 is further configured to: receive allocation information that is of the network temporary identifier and that is sent by the second network node when the second network node establishes a link connection to the first network node, and store the allocation information of the network temporary identifier. The processing module 33 is configured to allocate the network temporary identifier to the terminal based on the allocation information of the network temporary identifier.

Optionally, the processing module 33 is configured to configure, for the terminal, first resource configuration information required for RRC connection establishment when the second network node establishes a link connection to the first network node, or configure, for the terminal, resource configuration information required for RRC connection establishment based on the received first resource configuration information sent by the second network node.

Further, the RRC connection establishment complete message includes a registration request message; or the sending module 32 is further configured to: after the receiving module receives the radio resource control RRC connection request message sent by the terminal, send the registration request message to the second network node.

Further, the processing module 33 is further configured to configure, for the terminal, second resource configuration information required for RRC connection re-establishment when the second network node establishes a link connection to the first network node and the terminal, or configure, for the terminal, resource configuration information required for RRC connection re-establishment based on the received second resource configuration information sent by the second network node.

The apparatus in this embodiment may be used to execute the technical solutions of the method embodiment shown in FIG. 3. Implementation principles and technical effects thereof are similar, and are not further described herein.

An embodiment of this application provides a communications system, including a terminal, the apparatus shown in FIG. 8 or FIG. 9, and a second network node.

FIG. 10 is a schematic structural diagram of an apparatus 1000 according to this application. As shown in FIG. 10, the apparatus includes a memory 601, a processor 602, an interface circuit 603, and a bus 604.

The memory 601, the processor 602, and the interface circuit 603 are connected and implement mutual communication by using the bus 604. The processor 602 receives or sends information, for example, control information and data by using the interface circuit 603.

The memory 601 stores a set of program code, and the processor 602 invokes the program code stored in the memory 601 to perform the following operations:
sending first resource configuration information to a second network node; and
establishing a wireless connection to a terminal and the second network node based on the first resource configuration information or received second resource configuration information that is sent by the second network node.

Optionally, the wireless connection is any one of the following: a connection management procedure, a handover procedure, a bearer management procedure, and a paging and area update procedure.

Optionally, the processor 602 is configured to:
send the first resource configuration information to the second network node periodically or when a trigger condition is triggered; or receive a resource configuration information request sent by the second network node, and send the first resource configuration information to the second network node in a sending manner indicated by the resource configuration information request, where the sending manner is periodically sending or sending when the trigger condition is triggered.

Optionally, the trigger condition is any one or a combination of the following: an air interface condition changes, an antenna transmission mode changes, an antenna beam configuration, quantity, or form changes, resource utilization of the first network node is greater than a preset threshold, and interface load between the first network node and the second network node is greater than a preset threshold value.

Optionally, the first resource configuration information includes any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of packet data convergence protocol PDCP resource configuration information, radio link control RLC resource configuration information, media access control MAC resource configuration information, and physical layer PHY resource configuration information.

Optionally, the processor 602 is configured to: receive a resource status report response sent by the second network node.

Optionally, the processor 602 is configured to: receive initial resource configuration information sent by the second network node before or when the second network node establishes a link connection to the first network node, where the initial resource configuration information is information allocated by the second network node to the terminal.

The apparatus in this embodiment may be used to execute the technical solutions of the method embodiment shown in FIG. 3. Implementation principles and technical effects thereof are similar, and are not further described herein.

An embodiment of this application provides a communications system, including a terminal, the apparatus shown in FIG. 9, and a second network node.

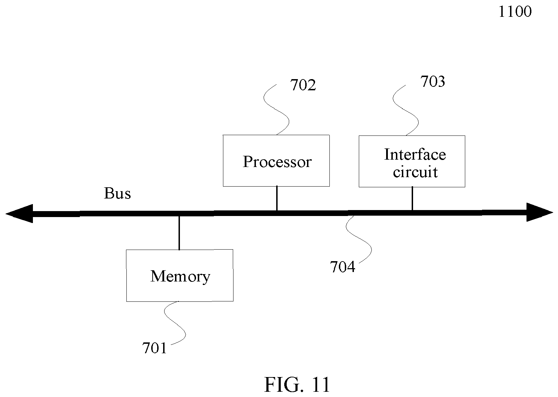

FIG. 11 is a schematic structural diagram of an apparatus 1100 according to this application. As shown in FIG. 11, the apparatus includes a memory 701, a processor 702, an interface circuit 703, and a bus 704.

The memory 701, the processor 702, and the interface circuit 703 are connected and implement mutual communication by using the bus 704. The processor 702 receives or sends information, for example, control information and data by using the interface circuit 703.

The memory 701 stores a set of program code, and the processor 702 invokes the program code stored in the memory 701 to perform the following operations:
receiving a radio resource control RRC connection request message sent by a terminal;
sending the RRC connection establishment message to the terminal;
receiving an RRC connection establishment complete message sent by the terminal; and
sending the RRC connection establishment complete message to a second network node.

Specifically, there is a communications interface between the apparatus and the second network node, and the second network node controls the apparatus.

Optionally, the processor 702 is configured to allocate a network temporary identifier to the terminal, and after sending the RRC connection complete message to the second network node, send the allocated network temporary identifier to the second network node.

Optionally, the processor 702 is configured to: receive allocation information that is of the network temporary identifier and that is sent by the second network node when the second network node establishes a link connection to the first network node, and store the allocation information of the network temporary identifier; and allocate the network temporary identifier to the terminal based on the allocation information of the network temporary identifier. Optionally, the processor 702 is configured to configure, for the terminal, first resource configuration information required for RRC connection establishment when the second network node establishes a link connection to the first network node, or configure, for the terminal, resource configuration information required for RRC connection establishment based on the received first resource configuration information sent by the second network node.

Optionally, the RRC connection establishment complete message includes a registration request message; or the processor 702 is configured to: after receiving the radio resource control RRC connection request message sent by the terminal, send the registration request message to the second network node.

Optionally, the processor 702 is configured to configure, for the terminal, second resource configuration information required for RRC connection re-establishment when the second network node establishes a link connection to the first network node and the terminal, or configure, for the terminal, resource configuration information required for RRC connection re-establishment based on the received second resource configuration information sent by the second network node.

The apparatus in this embodiment may be configured to execute the technical solutions of the method embodiment shown in FIG. 3. Implementation principles and technical effects thereof are similar, and are not further described herein.

An embodiment of this application provides a communications system, including a terminal, the apparatus shown in FIG. 10, and a second network node.

A person skilled in the art may clearly understand that, the descriptions of the embodiments provided in this application may be reference for each other. For ease and brevity of description, for example, for functions of the apparatuses and devices and performed steps that are provided in the embodiments of this application, refer to the related descriptions in the method embodiments of this application.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, and microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

In the several embodiments provided in this application, it should be understood that the disclosed system, device, and method may be implemented in other manners. For example, the described embodiment is merely an example. For example, the module or unit division is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all the modules may be selected according to actual needs to achieve the objectives of the solutions of the embodiments.

In addition, the schematic diagrams illustrating the system, device, method and different embodiments may be combined or integrated with other systems, modules, technologies or methods without departing from the scope of this application. In addition, the displayed or discussed mutual couplings or direct couplings or communication connections may be implemented by using some interfaces. The indirect couplings or communication connections between the apparatuses or units may be implemented in electrical, mechanical, or other forms. The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the appended claims.

## Claims

1. A wireless connection establishment method for a scenario in which a base station is divided into a control unit, CU, and a distributed unit, DU, comprising:
sending (S101), by a first network node, first resource configuration information to a second network node, wherein the first network node is the DU, and the second network node is the CU; and
establishing (S102), by the first network node, a wireless connection to a terminal and the second network node based on received second resource configuration information that is sent by the second network node; and
wherein the method further comprises:
receiving, by the first network node, initial resource configuration information sent by the second network node when the second network node establishes a link connection to the first network node, wherein the initial resource configuration information is information allocated by the second network node to the terminal, wherein the second resource configuration information includes the first resource configuration information and the initial resource configuration information.

2. The method according to claim 1, wherein the wireless connection is any one of the following: a connection management procedure, a handover procedure, a bearer management procedure, and a paging and area update procedure.

3. The method according to claim 1 or 2, wherein the sending (S101), by a first network node, first resource configuration information to a second network node comprises:
sending, by the first network node, the first resource configuration information to the second network node periodically or when a trigger condition is triggered; or
receiving, by the first network node, a resource configuration information request sent by the second network node, and sending the first resource configuration information to the second network node in a sending manner indicated by the resource configuration information request, wherein the sending manner is periodically sending or sending when the trigger condition is triggered.

4. The method according to claim 3, wherein the trigger condition is any one or a combination of the following:
an air interface condition changes, an antenna transmission mode changes, an antenna beam configuration, quantity, or form changes, resource utilization of the first network node is greater than a preset threshold, and interface load between the first network node and the second network node is greater than a preset threshold value.

5. The method according to claim 1, wherein the first resource configuration information comprises:
any one or more of a paging cycle configuration, a physical transmission resource configuration, antenna beam configuration information, interface load between the first network node and the second network node, an identifier of the first network node, a cell identifier list related to the first network node, a channel quality reporting configuration, and an antenna mode configuration, and any one or more of packet data convergence protocol PDCP resource configuration information, radio link control RLC resource configuration information, media access control MAC resource configuration information, and physical layer PHY resource configuration information.

6. The method according to claim 3, wherein the method further comprises:
receiving, by the first network node, a resource status report response sent by the second network node.

7. An apparatus (600) for a scenario in which a base station is divided into a control unit, CU, and a distributed unit, DU, wherein the apparatus is the DU, comprising:
a sending module (11), configured to send first resource configuration information to a second network node, wherein the second network node is the CU;
a processing module (12), configured to establish a wireless connection to a terminal and the second network node based on received second resource configuration information that is sent by the second network node; and
a receiving module (13), configured to receive initial resource configuration information sent by the second network node when the second network node establishes a link connection to the first network node, wherein the initial resource configuration information is information allocated by the second network node to the terminal, wherein the second resource configuration information includes the first resource configuration information and the initial resource configuration information.

## Patentansprüche

1. Verfahren zum Einrichten einer drahtlosen Verbindung für ein Szenario, bei dem eine Basisstation in eine Steuereinheit, CU, und eine verteilte Einheit, DU, geteilt ist, Folgendes umfassend:
Senden (S101) erster Ressourcenkonfigurationsinformationen durch einen ersten Netzwerkknoten an einen zweiten Netzwerkknoten, wobei der erste Netzwerkknoten die DU ist und der zweite Netzwerkknoten die CU ist, und
Einrichten (S102) einer drahtlosen Verbindung mit einem Endgerät und dem zweiten Netzwerkknoten durch den ersten Netzwerkknoten basierend auf empfangenen zweiten Ressourcenkonfigurationsinformationen, die von dem zweiten Netzwerkknoten gesendet werden, und
wobei das Verfahren ferner Folgendes umfasst:
Empfangen anfänglicher Ressourcenkonfigurationsinformationen durch den ersten Netzwerkknoten, die von dem zweiten Netzwerkknoten gesendet werden, wenn der zweite Netzwerkknoten eine Verbindung mit dem ersten Netzwerkknoten einrichtet, wobei die anfänglichen Ressourcenkonfigurationsinformationen Informationen sind, die dem Endgerät durch den zweiten Netzwerkknoten zugewiesen werden, wobei die zweiten Ressourcenkonfigurationsinformationen die ersten Ressourcenkonfigurationsinformationen und die anfänglichen Ressourcenkonfigurationsinformationen enthalten.

2. Verfahren nach Anspruch 1, wobei die drahtlose Verbindung eines des Folgenden ist: ein Verbindungsverwaltungsvorgang, ein Übergabevorgang, ein Trägerverwaltungsvorgang, ein Paging- und Bereichsaktualisierungsvorgang.

3. Verfahren nach Anspruch 1 oder 2, wobei das Senden (S101) erster Ressourcenkonfigurationsinformationen durch einen ersten Netzwerkknoten an einen zweiten Netzwerkknoten Folgendes umfasst:
Senden der ersten Ressourcenkonfigurationsinformationen durch den ersten Netzwerkknoten an den zweiten Netzwerkknoten periodisch oder beim Auslösen einer Auslösebedingung oder
Empfangen einer Ressourcenkonfigurationsinformationsanfrage, die von dem zweiten Netzwerkknoten gesendet wird, durch den ersten Netzwerkknoten und Senden der ersten Ressourcenkonfigurationsinformationen an den zweiten Netzwerkknoten in einer Art und Weise des Sendens, die durch die Ressourcenkonfigurationsinformationsanfrage angegeben wird, wobei die Art und Weise des Sendens periodisches Senden oder Senden beim Auslösen der Auslösebedingung ist.

4. Verfahren nach Anspruch 3, wobei die Auslösebedingung eines des Folgenden oder eine Kombination daraus ist:
einer Luftschnittstellenbedingung ändert sich, ein Antennenübertragungsmodus ändert sich, eine Antennenstrahlkonfiguration, -quantität oder -form ändert sich, eine Ressourcenauslastung des ersten Netzwerkknotens ist größer als ein voreingestellter Grenzwert und eine Schnittstellenlast zwischen dem ersten Netzwerkknoten und dem zweiten Netzwerkknoten ist größer als ein voreingestellter Grenzwert.

5. Verfahren nach Anspruch 1, wobei die ersten Ressourcenkonfigurationsinformationen Folgendes umfassen:
ein beliebiges oder mehreres von einer Paging-Zykluskonfiguration, einer Konfiguration einer physikalischen Übertragungsressource, Antennenstrahlkonfigurationsinformationen, einer Schnittstellenlast zwischen dem ersten Netzwerkknoten und dem zweiten Netzwerkknoten, einer Kennung des ersten Netzwerkknotens, einer Zellkennungsliste bezüglich des ersten Netzwerkknotens, einer Kanalgüteberichtskonfiguration und einer Antennenmoduskonfiguration und ein beliebiges oder mehrere von Ressourcenkonfigurationsinformationen eines Paketdatenkonvergenzprotokolls, PDCP, Ressourcenkonfigurationsinformationen einer Funkverbindungssteuerung, RLC, Ressourcenkonfigurationsinformationen einer Medienzugangssteuerung, MAC, und Ressourcenkonfigurationsinformationen einer physikalischen Schicht, PHY.

6. Verfahren nach Anspruch 3, wobei das Verfahren ferner Folgendes umfasst:
Empfangen einer Ressourcenzustandsberichtsantwort, die von dem zweiten Netzwerkknoten gesendet wird, durch den ersten Netzwerkknoten.

7. Vorrichtung (600) für ein Szenario, bei dem eine Basisstation in eine Steuereinheit, CU, und eine verteilte Einheit, DU, geteilt ist, wobei die Vorrichtung die DU ist, Folgendes umfassend:
ein Sendemodul (11), das dafür konfiguriert ist, erste Ressourcenkonfigurationsinformationen an einen zweiten Netzwerkknoten zu senden, wobei der zweite Netzwerkknoten die CU ist,
ein Verarbeitungsmodul (12), das dafür konfiguriert ist, basierend auf empfangenen zweiten Ressourcenkonfigurationsinformationen, die von dem zweiten Netzwerkknoten gesendet werden, eine drahtlose Verbindung mit einem Endgerät und dem zweiten Netzwerkknoten einzurichten, und
ein Empfangsmodul (13), das dafür konfiguriert ist, anfängliche Ressourcenkonfigurationsinformationen zu empfangen, die von dem zweiten Netzwerkknoten gesendet werden, wenn der zweite Netzwerkknoten eine Verbindung mit dem ersten Netzwerkknoten einrichtet, wobei die anfänglichen Ressourcenkonfigurationsinformationen Informationen sind, die dem Endgerät durch den zweiten Netzwerkknoten zugewiesen werden, wobei die zweiten Ressourcenkonfigurationsinformationen die ersten Ressourcenkonfigurationsinformationen und die anfänglichen Ressourcenkonfigurationsinformationen enthalten.

## Revendications

1. Procédé d'établissement d'une connexion sans fil pour un scénario dans lequel une station de base est divisée en une unité de commande, UC, et une unité distribuée, UD, comprenant
l'envoi (S 101), par un premier nœud de réseau, de premières informations de configuration de ressource à un deuxième nœud de réseau, le premier nœud de réseau étant l'UD et le deuxième nœud de réseau étant l'UC ; et
l'établissement (S102), par le premier nœud de réseau, d'une connexion sans fil avec un terminal et le deuxième nœud de réseau en fonction de deuxièmes informations de configuration de ressource reçues qui sont envoyées par le deuxième nœud de réseau ; et le procédé comprenant en outre :
la réception, par le premier nœud de réseau, d'informations de configuration de ressource initiales envoyées par le deuxième nœud de réseau lorsque le deuxième nœud de réseau établit une connexion de liaison avec le premier nœud de réseau, les informations de configuration de ressource initiales étant des informations allouées par le deuxième nœud de réseau au terminal, les deuxièmes informations de configuration de ressource comportant les premières informations de configuration de ressource et les informations de configuration de ressource initiales.

2. Procédé selon la revendication 1, dans lequel la connexion sans fil est l'une quelconque de ce qui suit : une procédure de gestion de connexion, une procédure de transfert, une procédure de gestion de support et une procédure de radiomessagerie et de mise à jour de zone.

3. Procédé selon la revendication 1 ou 2, dans lequel l'envoi (S 101), par un premier nœud de réseau, de premières informations de configuration de ressource à un deuxième nœud de réseau comprend :
l'envoi, par le premier nœud de réseau, des premières informations de configuration de ressource au deuxième nœud de réseau de manière périodique ou lorsqu'une condition de déclenchement est déclenchée ; ou
la réception, par le premier nœud de réseau, d'une demande d'informations de configuration de ressource envoyée par le deuxième nœud de réseau, et l'envoi des premières informations de configuration de ressource au deuxième nœud de réseau selon un mode d'envoi indiqué par la demande d'informations de configuration de ressource, le mode d'envoi étant un envoi de manière périodique ou un envoi lorsque la condition de déclenchement est déclenchée.

4. Procédé selon la revendication 3, dans lequel la condition de déclenchement est l'une quelconque des conditions suivantes ou une combinaison de celles-ci :
une condition d'interface radio change, un mode de transmission d'antenne change, une configuration, une quantité ou une forme de faisceau d'antenne change, une utilisation de ressources du premier nœud de réseau est supérieure à un seuil prédéfini et une charge d'interface entre le premier nœud de réseau et le deuxième nœud de réseau est supérieure à une valeur de seuil prédéfinie.

5. Procédé selon la revendication 1, dans lequel les premières informations de configuration de ressource comprennent :
l'un quelconque ou plusieurs d'une configuration de cycle de radiomessagerie, d'une configuration de ressources de transmission physique, d'informations de configuration de faisceau d'antenne, d'une charge d'interface entre le premier nœud de réseau et le deuxième nœud de réseau, d'un identifiant du premier nœud de réseau, d'une liste d'identifiants de cellules liée au premier nœud de réseau, d'une configuration de rapport de qualité de canal, et d'une configuration de mode d'antenne, et un élément quelconque ou plusieurs parmi des informations de configuration de ressources de protocole de convergence de données de paquets PDCP, des informations de configuration de ressources de commande de liaison radio, RLC, des informations de configuration de ressources de commande d'accès au support, MAC, et des informations de configuration de ressources de couche physique, PHY.

6. Procédé selon la revendication 3, le procédé comprenant en outre :
la réception, par le premier nœud de réseau, d'une réponse de rapport d'état de ressources envoyée par le deuxième nœud de réseau.

7. Appareil (600) pour un scénario dans lequel une station de base est divisée en une unité de commande, UC, et une unité distribuée, UD, l'appareil étant l'UD, comprenant :
un module d'envoi (11), configuré pour envoyer des premières informations de configuration de ressource à un deuxième nœud de réseau, le deuxième nœud de réseau étant l'UC ;
un module de traitement (12), configuré pour établir une connexion sans fil avec un terminal et le deuxième nœud de réseau en fonction de deuxièmes informations de configuration de ressource reçues qui sont envoyées par le deuxième nœud de réseau ; et
un module de réception (13), configuré pour recevoir des informations de configuration de ressource initiales envoyées par le deuxième nœud de réseau lorsque le deuxième nœud de réseau établit une connexion de liaison avec le premier nœud de réseau, les informations de configuration de ressource initiales étant des informations allouées par le deuxième nœud de réseau au terminal, les deuxièmes informations de configuration de ressource comportant les premières informations de configuration de ressource et les informations de configuration de ressource initiales.
